# EUROPEAN PATENT SPECIFICATION

(11) **EP 1 188 791 B1**
(45) Date of publication and mention of the grant of the patent: **06.12.2006**
(21) Application number: 01121132.3
(22) Date of filing: 04.09.2001
(51) Int. Cl.: C08L 25/12, C08L 51/00, B32B 27/28, C08L 27/06, C08L 51/04, C08L 55/02, C08L 53/00, C08L 77/00, C08L 67/02

(54) **Styrene copolymer compositions with improved weatherability and color retention**
Styrol-Copolymer-Zusammensetzungen mit verbesserter Wetterbeständigkeit und Farbbeibehaltung
Compositions de copolymère de styrène à résistance aux intempéries et conservation de la couleur améliorées

(30) Priority: 19.09.2000 US 664651
(43) Date of publication of application: 20.03.2002
(73) Proprietor: BASF Aktiengesellschaft, 67056 Ludwigshafen (DE)
(72) Inventor: Kogowski, Gary, Farmington Hills, MI 48336 (US); Görrissen, Heiner, Dr., 67069 Ludwigshafen (DE); Mc Kee, Graham Edmund, Dr., 67433 Neustadt (DE)

(56) References cited:
- EP-A- 0 722 988
- US-A- 4 801 495
- US-A- 5 977 254

## Description

### FIELD OF THE INVENTION

This invention relates to a method of manufacturing vinyl copolymer compositions having a color retention value of from 0.1 to 1.5, measured according to ASTM method G53. In addition it relates to vinyl copolymer compositions, in particular to styrene copolymer compositions having improved weatherability and said color retention performance. This invention further relates to a method of improving the weatherability and color retention performance of an exterior siding for a structure. In particular it relates to a method of improving the weatherability and color retention performance of the styrene copolymer compositions. More particularly, this invention relates to a method of manufacture of acrylonitrile-styrene-acrylate ("ASA") compositions, having improved weatherability and color retention. The invention also relates to a method of improving the weatherability and color retention performance of an exterior siding for a structure by manufacturing multi-layer composites incorporating such compositions. This invention further relates to the use of partially crystalline polymer having a crystallinity of from 5 to 65 %, measured according to JSO/DIS 11357-3 and being selected from the group consisting of a polyamide or a mixture of different polyamides as color retention agent for vinyl copolymer compositions.

### BACKGROUND OF THE INVENTION

Two-phase styrene copolymer resins composed of a resin matrix and an elastomeric or rubber component are known to provide a number of useful properties. Illustrative examples are ASA, olefin-styrene-acrylonitrile (OSA) or acrylonitrile-EPDM-styrene resins (AES), and acrylonitrile-butadiene-styrene (ABS). These resins find use in a variety of applications in the building and construction markets (home and commercial siding, window and door profiles, gutters), in leisure and recreation applications (spas, marine components, outdoor furniture, snowmobile components, recreational vehicles, motor homes, campers, etc.) and in the automotive industry (body side moldings, bumpers, interior trim, and mirror housings).

Depending on the particular resin and elastomeric compositions, various performance characteristics are possible. For example, ABS resins generally provide good low temperature impact resistance and processability. ASA and AES resins are particularly known for desirable impact strength, processability and weather resistance, that is, physical property retention and relatively acceptable color retention after significant outdoor exposure.

The prior art has long desired to provide styrene copolymer resins and/or compositions which possess the preceding advantageous physical and performance characteristics but exhibit improved weatherability performance and superior color retention. In particular, it would be advantageous to provide ABS, AES and ASA compositions, especially ASA compositions, having improved weatherability performance via superior color retention and desirable performance properties. Such compositions would be of benefit in the building and construction industries, especially with respect to the manufacture of exterior siding.

Previous attempts to provide styrene copolymer compositions having improved weatherability performance and exterior sidings made thereof have been widespread, yet relatively unsuccessful. For instance, these attempts have included the specialized embossing of mold surfaces of the styrene copolymer composition to minimize the effect of color differential, or fade, over exposure. This attempt failed to provide sufficient color retention and was disadvantageous with respect to processing, cost and/or other performance considerations.

A further attempt to improve the performance of styrene copolymer compositions and sidings made thereof has been to increase amounts of ultra-violet (UV) additive packages known in the art. Although some improvement in weatherability performance and color retention were realized, such attempts are exceedingly costly.

A further attempt to improve the weatherability performance has been to increase pigmentation, particularly TiO₂, responsible for contributing to the overall opacity, and therefore reflectivity and weatherability, of the resultant exterior siding. This attempt failed to provide sufficient color retention and was disadvantageous because light resistance of TiO₂ pigmentation over exposure to weathering was inadequate.

In sum, the prior art attempts detailed above have generally been characterized by one or more disadvantages, especially with respect to the adequacy of color retention over exposure, quality of surface appearance of the resultant exterior siding, cost considerations as in the increased amounts of UV additive packages, ease of manufacturing, ease of processing, and/or the performance properties of the compositions and the resultant exterior siding.

Accordingly, it would be advantageous to provide vinyl copolymer compositions, especially ASA compositions, which exhibit desirable performance properties, improved weatherability and color retention performance as compared to traditional vinyl copolymer compositions, advantageous cost considerations, and ease of manufacturing and/or processing.

It is also desirable to provide styrene copolymer compositions, especially ASA compositions, which are suitable for use as exterior siding. It is also desirable to provide a method of improving the weatherability and color retention performance of the styrene copolymer compositions, particularly with respect to exterior siding made of such styrene copolymer compositions.

### SUMMARY OF THE INVENTION

It is an object of this invention to provide vinyl copolymer compositions, especially ASA compositions, which exhibit improved weatherability and color retention performance when processed.

It is another object of this invention to provide a method of improving the weatherability and color retention performance of vinyl copolymer compositions and exterior siding. More specifically, it is an object of this invention to provide a method of improving the weatherability and color retention of vinyl copolymer compositions, especially ASA compositions, which is advantageous with respect to cost and ease of manufacturing.

More specifically, it is an object of the invention to provide vinyl copolymer compositions, especially ASA compositions, which can be used in the manufacture of weatherable, color-retaining exterior siding composite structures.

### DESCRIPTION OF THE DRAWINGS

Figure 1 is an enlarged, partial cross-sectional view of one embodiment of the composite structure of the invention showing a weatherable and color-retaining vinyl copolymer exterior layer adhered to a polyvinylchloride (PVC) interior layer.
Figure 2 shows the ternary diagram in which is displayed the pentagon defined by points as disclosed herein for preferred copolyamides of the present invention.

### DETAILED DESCRIPTION OF A PREFERRED EMBODIMENT

This invention satisfies the foregoing objects and more by providing a particulars vinyl copolymer composition.

A vinyl copolymer composition having a color retention of from 0.1 to 1.5, measured according to ASTM method G 53 essentially obtainable from
A) a graft copolymer resin comprising the reaction product of one or more monomers (a₁) selected from the group consisting of;
   - (a₁₁): aromatic vinyl compounds,
   - (a₁₂): vinyl cyanides, and
   - (a₁₃): mixtures thereof, wherein at least one monomer is an aromatic vinyl compound
   in the presence of an elastomeric rubber (AR) as a grafting base, and
B) a copolymer selected from the group consiting of:
   styrene/acrylonitrile copolymers, α-methylstyrene/acrylonitrile copolymers, styrene/methylmethacrylate copolymers, styrene/maleic anhydride copolymers, α-methylstyrene/styrene/acrylonitrile copolymers, styrene/acrylonitrile/methylmethacrylate copolymers, styrene/acrylonitrile/maleic anhydride copolymers, styrene/acrylonitrile/acrylic acid copolymers or mixtures thereof, and
γ) of from 0.1 to 20% by weight, based on the total composition, of a partially crystalline polymer having a crystallinity of from 5 to 65%, measured according to ISO/DIS 11357-3 as color retention agent (C) and being selected from the group consisting of a polyamide or a mixture of different polyamides,
by adding the color retention agent (C) to the graft copolymer resin (A) which optionally has been mixed with copolymer (B) and wherein the addition of the color retention agent is carried out at a temperature of at least as high as the melting temperature of (C) minus 10°C and not exceeding 310°C.

In a preferred embodiment of the subject invention, the particular vinyl copolymer composition requires the addition of color agent c (component γ) from 1 to 10% by weight based on the total composition of the mixture, and more preferably the addition of from 2 to 8% by weight based on the total composition In particular said mixture of different polyamides which can be added as color retention agent (c) consists of at least one polyamide 6.6 (c₁)and at least one aromatic copolyamide (c₂) containing
- (C₂₁): 20 to 90% by weight of units derived from terephthalic acid and hexamethylenediamine, whereby up to 10% by weight of the total aromatic dicarboxylic acids used can be replaced by isophthalic acid or other aromatic dicarboxylic acids,
- (c₂₂): up to 50% by weight of units derived from ε-caprolactam and
- (C₂₃): up to 80% by weight of units derived from adipic acid and hexamethylene diamine,
whereby the sum of the percentages of c₂₁ to c₂₃ is 100.

The vinyl copolymer composition of the invention includes a graft copolymer resin (A) (or mixture of different graft copolymers) which results from polymerizing one or more monomers (a₁) selected from the group consisting of (a₁₁) aromatic vinyl compounds, (a₁₂) ethylenically unsaturated compounds, and (a₁₃) mixtures thereof, wherein at least one monomer a₁₁ is used, in the presence of an elastomeric rubber (AR) (or mixture of different elastomers) preferably in particulate form. The elastomeric rubber (AR) in particulate form results from polymerizing one or more monomers (a₂) selected from the group consisting of (a₂₁) alkyl acrylates having from 1 to 32, preferably 1 to 8 carbon atoms, (a₂₂) 1,3-dienes such as butadiene or isoprene, (a₂₃) olefin compounds (other than a₂₂), (a₂₄) ethylenically unsaturated compounds, and (a₂₅) mixtures thereof and optionally (a₂₆) aromatic vinyl compounds, and/or (a₂₇) polyfunctional monomers having a cross-linking effect.

The invention further provides a method of

A method of manufacturing vinyl copolymer compositions, having a color retention value of from 0.1 to 1.5, measured according to ASTM method G 53, said method consisting essentially of the steps of:
α) providing a graft copolymer resin (A) comprising the reaction product of one or more monomers
   - (a₁): selected from the group consisting of
   - (a₁₁): aromatic vinyl compounds,
   - (a₁₂): vinyl cyanides, and
   - (a₁₃): mixtures thereof, wherein at least one monomer is an aromatic vinyl compound
   in the presence of an elastomeric rubber (AR) as a grafting base, and
β) mixing the graft copolymer resin (A) with a copolymer (B) selected from the group consisting of:
   styrene/acrylonitrile copolymers, α-methylstyrene/acrylonitrile copolymers, styrene/methylmethacrylate copolymers, styrene/maleic anhydride copolymers, α-methylstyrene/styrene/acrylonitrile copolymers, styrene/acrylonitrile/methylmethacrylate copolymers, styrene/acrylonitrile/maleic anhydride copolymers, styrene/acrylonitrile/acrylic acid copolymers or mixtures thereof, and
   γ) adding to the graft copolymer resin (A) and optionally the copolymer (B) of from 0.1 to 20% by weight, based on the total composition, of a partially crystalline polymer having a crystallinity of from 5 to 65%, measured according to ISO/DIS 11357-3 as a color retention agent (C) and being selected from the group consisting of a polyamide or a mixture of different polyamides,
wherein the addition is carried out at a temperature of at least as high as the melting temperature of (C) minus 10°C an not exceeding 310°C.

As used herein, it is to be understood in the art that the terms "weatherable" or "color-retaining" refer to a Δb value after six cycles of artificial weathering in a QUV weatherometer (see Example 1) falling within the range of from 0.1 and 1.5 Δb units as measured by a Minolta CM-2002 spectrophotometer in CIE L*a*b* Units, Illuminant D65, 10 degree Observer. Color retention is measured on extruded monolayer vinyl copolymer composition or coextruded sheets having an outer layer of vinyl copolymer, the thickness of the vinyl copolymer composition in either case generally ranging from 5 to 50 mils (0.127 to 1.27 mm).

Graft copolymer resin (A) as used herein generally refers to polymer compositions or resins resulting from the polymerization or copolymerization of at least one vinyl aromatic monomer (a₁₁). Preferably, the at least one vinyl aromatic monomer will be copolymerized with a vinyl cyanide as monomer (a₁₂). The monomers (a₁₁) and/or (a₁₂) will be copolymerized in the presence of an elastomeric or rubber (AR). Most preferably, the graft copolymers will have a core/shell structure. Preferably, the graft copolymer resin (A) will contain the elastomeric rubber (AR) as rubber particles grafted with one or more monomers (a₁). Preferably, this graft shell of the rubber particles will be formed by polymerizing styrene and acrylonitrile in the presence of the elastomeric rubber (AR). Suitable are mixtures of graft copolymers (A) and copolymers (B).

This mixture can either be prepared by mixing the graft copolymer (A) with (B) or is formed in situ. The latter is the case, if not all of the monomers (a₁₁) and/or (a₁₂) are grafted onto the elastomeric rubber (AR).

Graft copolymer resin (A) will generally result from the polymerization or copolymerization of at least one monomer (a₁). Monomers (a₁) may generally be those monomers used in the production of styrene copolymers. Such monomers are typically described as (a₁₁) aromatic vinyl compounds, (a₁₂) vinyl cyanides and/or (a₁₃) mixtures thereof.

Illustrative examples of aromatic vinyl compounds (a₁₁) are styrene, α-methylstyrene, o-methylstyrene, p-methylstyrene, m-methylstyrene, 1,3-dimethylstyrene, tertbutylstyrene, vinylnaphthalene, and the like. Preferred aromatic compounds (a₁₁) are styrene, α-methylstyrene, p-methylstyrene and tertbutylstyrene. Most preferred aromatic compounds (a₁₁) are styrene and α-methylstyrene.

Illustrative examples of vinyl cyanides (a₁₂) are compounds such as vinyl cyanides such as acrylonitrile, or methacrylonitrile. Preferred monomer (a₁₂) is acrylonitrile.

When graft copolymer resin (A) results solely from the polymerization or copolymerization of one or more monomers (a₁), the amounts of monomers (a₁₁) and/or (a₁₂) are dependent upon the desired properties of resin (A). Preferably, one or more monomer (a1) will have at least 20 weight percent of an aromatic vinyl compound (a₁₁), based on the total weight of one or more monomer (a1). Most preferably, one or more monomer (a₁) will have from 30 to 85, preferably from 30 to 75 weight percent of aromatic vinyl compound (a₁₁).

Monomers (a1) may be polymerized by traditional processes known to those skilled in the art. Polymerization may be carried out in mass, solution, suspension, or aqueous emulsion. Free radical polymerization is preferred.

Graft copolymer resins (A) are well known in the art. An illustrative example is disclosed in US 4,634,734, hereby incorporated by reference in its entirety.

For example, graft copolymer resin (A) may comprises the polymerization reaction product of one or more monomers (a1) in the presence of an elastomeric rubber (AR). Elastomeric rubber (AR) may also be referred to as a grafting base. It will be appreciated that a great variation in the performance properties of graft copolymer resin (A) may be obtained depending upon the selection of elastomeric rubber or grafting base (AR).

Examples of suitable elastomeric (AR) are linear polyalkyldiene, polybutadiene, polyisoprene, styrene-butadiene copolymers, acrylonitrile-butadiene copolymers, acrylonitrile-butadiene copolymers, alkylacrylate rubbers, EPM rubbers (ethylene/propylene rubbers), EPDM rubbers (ethylene/propylene/diene rubber containing a non-conjugated diene, such as, for example, 1,5-hexadiene or norbornadiene, in small quantities as the diene), and silicone rubbers.

Those skilled in the art will appreciate that elastomeric rubber (AR) may result from the polymerization or copolymerization of one or more monomers (a₂) selected from the group consisting of (a₂₁) alkyl acrylates having from 1 to 8 carbon atoms in the alkyl group, (a₂₂) a 1,3-diene, (a₂₃) olefin compounds, (a₂₄) ethylenically unsaturated compounds, and/or (a₂₅) mixtures thereof and optionally (a₂₆) aromatic vinyl compounds, and/or (a₂₇) polyfunctional monomers having a crosslinking effect.

Elastomeric rubber (AR) may result from the polymerization or copolymerization of one or more monomers (a₂) selected from the group of (a₂₁) alkyl acrylates having from 1 to 8 carbon atoms in the alkyl group. Preferred are alkyl acrylates having from 4 to 8 carbons in the alkyl moiety. Most preferred examples are n-butyl acrylate and ethylhexyl acrylate. Monomer (a₂) can be one or more alkyl acrylates alone or in admixture with one another. Suitable alkyl acrylates may also be mixed with suitable monomers selected from monomers (a₂₂) to (a₂₄), (a₂₆) and/or (a₂₇) described herein.

One or more monomers (a₂) may also be selected from the group consisting of 1,3-dienes (a₂₂). Illustrative examples are butadiene, isoprene, and the like. The 1,3-dienes may be used alone, in admixture with other 1,3-dienes, or mixed with other suitable monomers selected from monomers (a₂₁) and/or (a₂₃), (a₂₄), (a₂₆) and/or (a₂₇) described herein. For example, it will be appreciated that, when vinyl resin (A) is an ABS resin, rubber (AR) may be a conjugated diolefin polymer latex such as polybutadiene or an elastomeric butadiene copolymer of butadiene-styrene, butadiene-acrylonitrile, butadiene-alkyl acrylates, and the like.

Monomers (a₂) may also be one or more olefins (a₂₃), which differ from the monomers (a₂₂) and (a₂₃). Illustrative examples of olefins (a₂₃) are those aliphatic compounds having from 2 to 4 carbons such as ethylene, propylene, butylene and the like. Preferred are ethylene and propylene. Olefins (a₂₃) may be used alone as monomer (a₂) or in admixture with each other or mixed with one or more other monomers selected from monomers (a₂₁), (a₂₂), (a₂₄) and/or (a₂₆) to (a₂₇).

Monomers (a₂) may be selected from monomers which are ethylenically unsaturated compounds (a₂₄), which differ from the monomers (a₂₂) and (a₂₃). Ethylenically unsaturated compounds suitable for use as monomer (a₂₄) and hence monomer (a₂) are those as described above with respect to monomers suitable for use as one or more monomers (a₁) (a₁₂). Other illustrative examples include hydroxyalkyl acrylates or methacrylates. Preferred hydroxalkyl acrylates/methyacrylates are those having from 2 to 6 carbon atoms in the alkyl moiety. One or more of the monomers (a₂) may be an ethylenically unsaturated compound alone, or in admixture with another ethylenically unsaturated compound, or an ethylenically unsaturated compound mixed with one or more other monomers selected from monomers (a₂₁) to (a₂₃) and/or (a₂₆) to (a₂₇).

One or more monomers (a₂) may in addition to the monomers (a₂₁) to (a₂₄) also be selected from aromatic vinyl compounds (a₂₆). Aromatic vinyl compounds suitable for use as monomers (a₂₆) are those described above with respect to monomers (a₁) (a₁₁). Styrene is particularly preferred for use as a monomer (a₂₆). One or more of the monomers (a₂) may be an aromatic vinyl compound mixed with one or more other monomers selected from monomers (a₂₁) to (a₂₄) and/or (a₂₇).

Monomers suitable for use as polyfunctional monomers (a₂₇) which may optionally be present as one or more monomers (a₂) having a crosslinking effect are those which contain at least two double bonds capable of copolymerization. Examples are divinylbenzene, diallyl maleate, diallyl fumarate, diallyl phthalate, allyl methacrylate, butanediol diacrylate, hexanediol diacrylate, triallyl cyanurate and triallyl isocyanurate. In the event that the elastomeric rubber (AR) is not solely built up from monomers (a₂₂) the monomers (a₂₇) may also be butadiene and/or isoprene. A preferred monomer (a₂₇) is the acrylic ester of tricyclodecenyl alcohol. One preferred elastomeric rubber (AR) comprises the monomers (a₂₇).

Elastomeric rubber (AR) may be made by polymerization processes known to those skilled in the art. Such processes include emulsion polymerization and bulk or solution polymerization followed by emulsification of the resulting polymers. An illustrative example of emulsion polymerization is described in US 5,252,666 and in DE-A12 60 135, the disclosures of which are incorporated by reference herein in their entirety.

It will be appreciated that graft copolymers suitable for use in this invention as component (A) may, and preferably will have, a core/shell structure. Such structures are described in US 5,252,666. It will be appreciated that the foregoing elastomeric rubber (AR) will generally form the core. The surrounding core may be formed by the polymerization of the monomers (a₁) or the like in the presence of the elastomeric rubber (AR). Such processes are further described in US 5,252,666.

A most preferred elastomeric rubber (AR) will have a weight average particle size d₅₀ of from 50 to 1000, preferably from 50 to 800, more preferably, from 50 to 600 nm, determined according to the method of W. Scholtan and H. Lange, Kolloid-Z. und Z.-Polymere 250 (1972) pages 782-796. The particle size is determined by an ultracentrifuge measurement, whereby the integral mass distribution of the particle diameters of a sample is obtained. Therefrom it can be determined how much percent by weight of the particles have a diameter which is the same or smaller than a certain size.

The polymer surrounding the core/shell particles will generally be a polymer matrix, typically a rigid copolymer. Those skilled in the art will appreciate that such may comprise the polymerized free ungrafted monomers (a₁) resulting from the polymerization of monomers (a₁) in the presence of elastomeric rubber core (AR) and the production of the desired core/shell structure. Alternatively, graft copolymer resin (A) may be formed from the mixing of separately prepared polymer or copolymer (B) with either elastomeric rubber (AR) or the polymerization reaction product of monomers (a₁) in the presence of elastomeric rubber (AR), i.e., graft copolymers having a core/shell structure.

Copolymer (B) will result from the copolymerization of one or more monomers which are described above with respect to monomers (a₁₁) and (a₁₂). Styrene, alpha methyl styrene, and acrylonitrile are preferred, with mixtures of styrene and acrylonitrile being most preferred. (B) may be a mixture of copolymers, e.g., styrene-acrylonitrile copolymer with α-methylstyrene-acrylonitrile copolymer. Copolymer (B) will generally have from 20 to 50 percent by weight of monomers (a₁₂), based on the weight of copolymer (B). Monomers (a₁₂) will preferably be present in an amount of from 10 to 94, such as 35 to 94, preferably 10 to 90 percent by weight, based on the weight of the total composition of (a₁₁) and (a₁₂) that is to say (a₁₃).

Copolymer (B) is selected from the group consisting of: a styrene/acrylonitrile copolymer, an α-methylstyrene/acrylonitrile copolymer, a styrene/methyl methacrylate copolymer, a styrene/maleic anhydride copolymer an α-methylstyrene/styrene/acrylonitrile-, a styrene/acrylonitrile/-methylmethacrylate-, a styrene/acrylonitrile/maleic anhydride or a styrene/acrylonitrile/acrylic acid terpolymer, or an or mixtures thereof. If copolymer (B) consists of mixtures of the above, the acrylonitrile content of the various copolymers containing acrylonitrile should preferably not differ from each other by more than 10 percent by weight, most preferably by not more than 5 percent by weight based on the copolymer.

Most preferably, copolymer (B) will be a styrene-acrylonitrile SAN resin or an α-methylstyrene-acrylonitrile resin or mixtures thereof. Commercially available SAN resin suitable for use in the instant invention as component (B) are characterized by their content of styrene, α-methylstyrene and/or substituted styrenes of from 50 to 100, preferred 60 to 95, especially preferred, 60 to 90% by weight, based on the SAN. Their (meth)acrylonitrile content can be up to 42%, preferably from 5 to 40, in particular, from 7 to 38% by weight, based on the SAN. The remaining portions can be C₁- to C₈-alkylesters of (meth)acrylic acid, maleinimide, N-methyl-N-phenyl- or N-cyclohexylmaleinimide or maleic anhydride. Their viscosity numbers are generally from 40 to 160, preferably from 45 to 120 ml/g (as measured according to DIN 53 726 at 25°C in 0.5% by weight in dimethylformamid), corresponding to a weight average molecular weight (M_{w}) of from 40,000 to 200,000 g/mol.

Polymerization processes such as those described above with respect to the polymerization of monomers (a₁) are suitable for the production of copolymer (B). Generally, copolymers (B) will have viscosity numbers of from 40 to 100, particularly of 50 to 90.

If copolymer (B) does not result from the polymerization of monomers (a₁) in the presence of elastomeric rubber (AR), copolymer (B) may be incorporated with the polymerization reaction product of monomers (a₁) in the presence of elastomeric rubber (AR), by processes known to those skilled in the art. Copolymer (B) may be mixed all at once with the polymerization reaction product of monomers (a₁) and (a₂), or may be mixed in smaller portions.

Traditional compounding techniques, such as extrusion compounding using single or twin screw extruders, may be used. For example, one preferred method is to intensively mix a melt of the copolymer (B) with the result of copolymerized graft copolymer of monomers (a₁) and elastomeric rubber (AR) at temperatures above 200°C. Alternatively, if the various copolymer components were prepared by emulsion polymerization, the resultant polymer dispersions can be mixed and the polymer mixture processed. Preferably, copolymer (B) will be mixed with the graft copolymer of monomers (a₁) and elastomeric rubber (AR) by combined extrusion, kneading or rolling of the components. Those skilled in the art will appreciate that prior to this it is necessary to isolate the components from the solution or aqueous dispersion resulting from the polymerization. Partial dewatering of the grafting copolymerization products obtained in an aqueous dispersion, i.e., graft copolymer of monomers (a₁) and elastomeric rubber (AR), is also possible and can be mixed with copolymer (B) as damp crumbs with complete drying of the copolymerized graft copolymer mixtures taking place during the mixing process.

Graft copolymer resin (A) may additionally contain additives such as are commonly included for styrene copolymer resins. Examples include fillers, other compatible plastics, antistatics, antioxidants, flame-retardants, lubricants, colorants, pigments and/or dyes. Such additives are commonly used in amounts of from 0.1 to 70 parts by weight based on 100 parts by weight of the graft copolymer resin (A). In addition, dyes and pigments may be incorporated into graft copolymer resin (A) in amounts of from 0.02 to 10 parts by weight, based on the weight of graft copolymer resin (A).

While graft copolymer resin (A) may be any of the styrene copolymer resins discussed above, it is preferred that graft copolymer resin (A) will be ASA. An illustrative and suitable resin (A) may have an elastomeric rubber (AR) phase of butylacrylate and tricyclodecenylacrylate and is grafted with (a₁) styrene and acrylonitrile in a ratio of 75 to 25 and is mixed with a styrene/acrylonitrile copolymer or α-methylstyrene-acrylonitrile copolymer (B) having an acrylonitrile content of 22 to 35 percent.

According to the invention, the color retention agent (C) is at least one partially crystalline polymer having a crystallinity of from 5 to 65 %. The crystallinity is determined via the determination of the melt enthalpy in a DSC (Differential Scanning Calometry) measurement according to ISD/DIS 11357-3. From the melt anthalpy H the crystallinity wc can then be calculated according to: wc = H/H100, whereby H100 is the melt enthalpy of a 100 % crystalline polymer, values of which may for instance be found in Bernhard Wunderlich, Thermal Analysis, Academic Press Inc. 1990. If there are several modifications reference is made to the most stable one. Thus for example on page 424 the 100 % melt enthalpy for nylon 6,6 α (57,8 kJ/mol repeating unit) corresponds to 257 J/g.

Among these partially crystalline polymers, polyamides, in particular polyamide 6.6 and aromatic copolyamides, or copolymers thereof may be used as component (C). Mixtures of different partially crystalline polymers may also be employed as color retention agent (C).

Preferably, the color retention agent (C) is a polyamide or a mixture of different polyamides. As referenced initially above, one of the preferred polyamides is polyamide 6.6 (c₁). Generally, C can be a partly aromatic copolyamide (c₂) or a mixture of two or more different partly aromatic copolyamides.

The partly aromatic copolyamides (c₂) present in the vinyl copolymer compositions according to the invention contain as component (c₂₁) 20-90% by weight of units derived from terephthalic acid and hexamethylenediamine. A small proportion of terephthalic acid, preferably not more than 10% by weight of the total aromatic dicarboxylic acids used, can be replaced by isophthalic acid or other aromatic dicarboxylic acids, preferably by those where the carboxyl groups are para-disposed. Besides the units derived from terephthalic acid and hexamethylenediamine, copolyamides (c₂) contain as component (c₂₂) units derived from ε-caprolactam and/or contain as component (c₂₃) units derived from adipic acid and hexamethylenediamine.

The proportion of units derived from ε-caprolactam is not more than 50% by weight, preferably from 20-50% by weight, in particular 25-40% by weight, while the proportion of units derived from adipic acid and hexamethylenediamine is up to 80% by weight, preferably 30-75% by weight, in particular 35-65% by weight.

Copolyamides (c₂) may also contain units not only of ε-caprolactam but also of adipic acid and hexamethylenediamine; in this case, it is an advantage for the proportion of units which are free of aromatic groups to be not less than 10% by weight, preferably not less than 20% by weight. The ratio of units derived from ε-caprolactam and units derived from adipic acid and hexamethylenediamine here is not subject to any particular restriction.

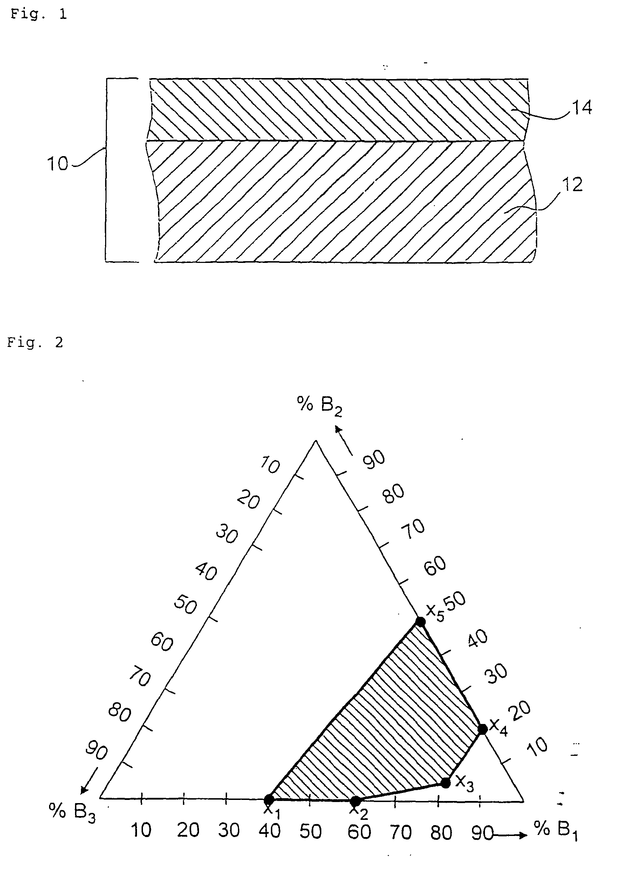

Preference is given to copolyamides whose composition in a ternary diagram is within the pentagon defined by the corner points X₁ to X₅ (see Figure 2), which are each in turn defined as follows:

| | |
|---|---|
| X₁ | 40% by weight of units (C₂₁) |
| | 60% by weight of units (C₂₃) |
| X₂ | 60% by weight of units (C₂₁) |
| | 40% by weight of units (C₂₃) |
| X₃ | 80% by weight of units (C₂₁) |
| | 5% by weight of units (C₂₂) |
| | 15% by weight of units (C₂₃) |
| X₄ | 80% by weight of units (C₂₁) |
| | 20% by weight of units (C₂₂) |
| X₅ | 50% by weight of units (C₂₁) |
| | 50% by weight of units (c₂₂) |

Particular advantageousness for many purposes according to this invention has been found to be possessed by copolyamides (c₂) containing 50-80, in particular 60-75% by weight of units derived from terephthalic acid and hexamethylenediamine (units c₂₁)) and 20-50, preferably 25-40, percent by weight of units derived from ε-caprolactam (units c₂₂)).

Besides the above-described units c₂₁) to c₂₃), the partly aromatic copolyamides c₂) may additionally contain minor amounts, preferably not more than 15% by weight, in particular, not more than 10% by weight, of further polyamide units of the type known from other polyamides. These units may be derivative from dicarboxylic acids of 4-16 carbon atoms and aliphatic or cycloaliphatic diamines of 4-16 carbon atoms and from aminocarboxylic acids and the corresponding lactams of 7-12 carbon atoms. Suitable monomers of these types are suberic acid, azaleic acid, sebacic acid and isophthalic acid, merely mentioned as representatives of dicarboxylic acids, 1,4-butanediamine, 1,5-pentanediamine, piperazine, 4,4'-diaminodicyclohexylmethane, 2,2-(4,4'-diaminodicyclohexyl)propane and 3,3'-dimethyl-4,4'-diaminodicyclohexylmethane, merely mentioned as representatives of diamines and capryllactam, enantholactam, omega-aminoundecanoic acid and laurolactam, merely mentioned as representatives of lactams or aminocarboxylic acids.

Particular advantageousness has been found to be possessed by partly aromatic copolyamides (c₂) whose triamine content is less than 0.5, preferably less than 0.3, percent by weight.

Most existing processes give partly aromatic copolyamides having triamine contents of above 0.5% by weight, which has an adverse effect on product quality and leads to problems in continuous production. A particular triamine responsible for these problems is dihexamethylenetriamine, which forms from the hexamethylenediamine starting material.

Copolyamides having a low triamine content have lower melt viscosities if compared at the same solution viscosity with products of the same composition but a higher triamine content. This fact has positive effects not only on the processability but also on the product characteristics.

According to one aspect of the invention vinyl copolymer compositions which comprise a mixture of one or more polyamides 6.6. (c₁) and one or more aromatic copolyamides (c₂) containing components (c₂₁) to (c₂₃) as color retention agent (C) are particularly preferred. The weight ratio of polyamide 6.6 to such aromatic copolyamides may very in a wide range such as from 0.1/99.9 to 99.9/0.1. According to one of the preferred embodiments it may vary between 10/90 to 90/10. Preferably the weight ratio of polyamide 6.6 to such aromatic copolyamide is in the range of from 30/70 to 70/30.

The melting points of partly aromatic copolyamides c₂) are within the range from 260°C to above 300°C, this high melting point also being associated with a high glass transition temperature, generally of more than 75, in particular, of more than 85°C (in the dry state).

Binary copolyamides based on terephthalic acid, hexamethylenediamine and ε-caprolactam have if they contain about 70% by weight of units derived from terephthalic acid and hexamethylenediamine melting points within the range of 300°C and (in the dry state) a glass transition temperature of more than 110°C may also be used as color retention agent (C) according to this invention.

Binary copolyamides based on terephthalic acid, adipic acid and hexamethylenediamine have melting points of 300°C or more at even lower levels of about 55% by weight of units from terephthalic acid and hexamethylenediamine (HMD), although the glass transition temperature is not quite as high as in the case of binary copolyamides which contain ε-caprolactam in place of adipic acid or adipic acid/HMD.

The preferred partly aromatic copolyamides of low triamine content which can be employed as component (C) can for instance be prepared by the processes described in EP-A-129 195, EP-A-129 196 and US 5,252,661, the disclosures of which are incorporated herein by reference.

Component C may be added to the graft copolymer resin component (A) and optionally the copolymer B by traditional compounding methods known to those skilled in the art and as discussed above with respect to the incorporation of copolymer (B). Most preferably, component (C) will be mixed with the graft copolymer resin component (A) and optionally the copolymer (B) using a twin screw compounding extruder or the equivalent. Preferably during the addition of component (C) to component (A) or the mixture of (A) and (B), temperatures above the melting temperature of (C) to a temperature which is lower than the melting temperature of (C) by at most 20°C should be used. Preferably, during the addition of component (C) to component (A) the temperature should not exceed 310 °C but should at least be a high as the melting temperature of component (C) minus 10°C.

The method and composition of the invention requires that no more than 20% by weight of the total composition of (A) or [(A)+(B)]+(C) be comprised of component (C). Amounts of component (C) greater than 20% by weight of the total composition have been found to affect the performance properties of the finished composition, especially with respect to impact properties.

It is desirable that the compositions of the invention have an optimal balance of weatherability and color retention properties, and performance properties, especially impact properties. Preferably, the compositions of the invention will thus have from 1 to 10% and most preferably from 2 to 8% by weight of component (C), based on the weight of components (A) and (B) and (C). The compositions of the invention are further characterized by useful performance properties, especially with respect to impact strength.

Although the compositions of the invention will find use in a variety of applications, they are particularly well suited for use in exterior applications such as siding, window frames and the like. A most preferred use is in a composite suitable for use as exterior siding for a structure.

Said composite has at least one interior layer (I) which is a thermoplastic and at least one exterior layer (II) which includes the weatherable vinyl copolymer compositions of the invention. Exterior layer (II) will generally be continuous with and in communication with interior layer (I). Turning to Figure 1, it can be seen that composite 10 is comprised of interior layer 12 and exterior layer 14. The composite 10 will be used so that interior layer 12 is positioned so as to be protected from exposure to light and weather, i.e., next to the surface of a building or structure, while weatherable exterior layer 14 faces outward toward exposure from light and weather.

Interior layer (I) 12 will be comprised of at least one polymeric layer but may be a multilayer polymeric structure. Layer 12 will generally be comprised of ABS, PVC (poly(vinylchloride)), or mixtures thereof. Preferably, layer (I) will be a PVC substrate such as a rigid (non-plasticized) PVC substrate with or without additives such as impact modifiers (such as CPE, acrylic, styrenic block copolymers); processing aids; thermal and oxidative stabilizers; UV stabilizers; fillers (such as talc, TiO₂, calcium carbonate); pigments and recycled products.

Exterior layer (II) 14 will be a vinyl copolymer composition comprising graft copolymer resin (A), optionally copolymer (B) and color retention agent (C) according to the subject invention. Most preferably, exterior layer 14 will comprise an ASA resin such as described above and from 2 to 8% by weight of color retention agent (C), based on the weight of ASA and color retention agent.

Interior layer (I) 12 will generally have a thickness of from 10 to 100 mils and preferably from about 25 to 50 mils (0.63 to 1.27 mm). Exterior layer (II) 14 will generally have an average thickness of from 4 to 15 mils (0.1016 to 0.381 mm). Preferably exterior layer 14 will have an average thickness of from 4 to 10 mils (0.1016 to 0.254 mm).

It will be appreciated that the thickness of both layers 12 and 14 will vary as a result of the coextrusion process. For example, layer 14 may typically show film thickness ranging from 7 mils to 11 mils (0178 to 0.279 mm), with an average film thickness of approximately 9 mils (0.229 mm).

The composite of the invention will be formed by coextruding techniques such as are well known to those skilled in the art. Exterior layer 12 and interior layer 14 will be simultaneously extruded in the form of mono- or multilayer sheets such that layer 12 is continuous with and in communication with layer 14.

The coextrusion process of the composite of the invention will preferably take place at temperatures less than 450°F (250°C). Most preferably, the composite of the invention will be extruded at temperatures of between 320° to 400°F (178° to 222°C).

Alternatively, the parts can be formed from the vinyl copolymer compositions according to the invention by injection molding. Thereby, it is preferred to use injection molding temperatures of above the melting temperature of vinyl resin A and copolymer B and below the melting temperature of the color retention agent C.

The following examples are intended to illustrate but not limit the invention.

### Example 1

Traditional vinyl copolymer compositions for use as controls ("Control ASA resin 1-3") were prepared by adding approximately 3.0% titanium dioxide to an ASA resin (a UV-stabilized, high impact ASA resin made by compounding on a twin screw extruder 53 parts by weight of SAN (made from 67 % by weight of styrene and 33 % by weight of acrylonitrile and characterized by a viscosity number of 78, as measured according to DIN 53726 using a 0.5 % by wt. solution of the polymer in dimethylformamid) and 43 parts by weight of butyl acrylate graft rubber, comprising 75 wt % of a crosslinked n-butylacrylate with core grafted with 25 wt % of a mixture of styrene and acrylonitrile in a weight ratio of 75 : 25 a tensile modulus of elasticity of approx. 2000 MPa, determined according to ISO 527), to approximately 4.5 to 6.0% of a polyethyleneterephthalate (PET) or polybutyleneterephthalate (PBT) polyester, and to approximately 0.9 to 1.0% of a UV stabilizer package.

A weatherable and color-retaining vinyl copolymer composition according to the subject invention ("Improved ASA resin #1") was prepared by adding approximately 3.0% titanium dioxide and approximately 6.0% of a low viscosity (2.5g/ml by dilute solution viscosity technique in 98% sulfuric acid) polyamide 6,6 compound to an extrudable acylonitrile styrene acrylate (ASA) resin copolymer. A second weatherable and color-retaining vinyl copolymer composition according to the subject invention ("Improved ASA resin #2) was prepared by adding approximately 3.0% titanium dioxide and approximately 6.0% of an intermediate viscosity (3 g/ml by dilute solution viscosity technique in 98% sulfuric acid) nylon 6,6 compound to an extrudable acylonitrile styrene acrylate (ASA) resin copolymer. The polyamide 6,6 compounds were added as the color retention agent polyamide 6.6 in place of the polyesters of the conventional control composition of vinyl copolymer compositions. Amounts UV stabilizer package in Improved ASA resins #1 and 2 were equivalent to that of the controls.

Both the Control ASA resins 1-3 and the Improved ASA resins #1 and 2 were prepared using a twin screw extruder to incorporate the TiO₂ and the PET, PBT, or polyamide.

Test plaques were extruded using an extruder. A blue pigment was dosed into each material during extrusion to simulate colorant systems typically used by the siding industry. Each extruded sheet was about 50 mils in thickness and embossed as typical of PVC siding profiles. The sheets were allowed to cool and color retention measurements were recorded for each temperature profile. The sheets were extruded at three temperatures; 370_F (188_C), 400_F (204_C), and 430_F (221_C).

The color retention results after exposure to six Q-UV cycles are summarized in Table 1. As described by ASTM method G 53, the Q-UV method simulates the deterioration and/or color shift of a plastic material caused by sunlight and dew by means of artificial ultraviolet light and condensation apparatus. The test apparatus consists of a series of UV lamps, a heated filtered water supply, and specimen racks. For accelerated weathering evaluations pertaining to this invention, UV-A 340 lamps were employed. The environmental chamber temperature used was 60°C. As is common in the art, one Q-UV cycle is defined as submitting the panel to:
- 60 hours of UVA 340 lamps ON;
- 30 hours of an H2O condensate cycle; and
- 10 hours of UVA 340 lamps ON
for a total of 100 hours Q-UV exposure wherein four cycles simulates approximately two years of outdoor south Florida exposure.

**Table 1**

| | | | | |
|---|---|---|---|---|
| *Sample No.* | Description | Δb 370_F (188_C) | Δb 400_F (204_C) | Δb 430_F (221_C) |
| *1* | Control 1 | 2.4 | 2.2 | 2.0 |
| *2* | Control 2 | 2.5 | 2.8 | 2.3 |
| *3* | Control 3 | 2.2 | 2.5 | 3.4 |
| *4* | Improved ASA resin #1 | .3 | .4 | .3 |
| *5* | Improved ASA resin #2 | .2 | .3 | .3 |

It is understood that Δb measures the "yellow/blue" color axis that is significantly noticeable by visual inspection in exterior sidings. Further, in the above experimentation Δb is meant to denote weatherability of the styrene copolymer composition.

Further experimentation was conducted with an aromatic copolyamide as color retention agent (C). As with Example 1, the following example, Example 2, is intended to illustrate but not limit the invention.

### Example 2

A weatherable and color-retaining vinyl copolymer composition according to the subject invention ("Improved ASA resin #3") was prepared by adding approximately 3.0% titanium dioxide and approximately 1% of aromatic nylon to an extrudable acylonitrile styrene acrylate (ASA) resin copolymer. A second weatherable and color-retaining vinyl copolymer composition according to the subject invention ("Improved ASA resin #4) was similarly prepared by adding approximately 3% of a partially aromatic polyamide made from 67 wt % of units derived from terephthalic acid and hexamethylenediamine and 33 wt % of ε-caprolactam, a third composition according to the subject invention ("Improved ASA resin #5) was similarly prepared by adding approximately 6% a the partially aromatic polyamide, and a fourth composition according to the subject invention ("Improved ASA resin #6) was similarly prepared by adding approximately 8% of a the partially aromatic polyamide.

The resins and test plaques were prepared in the same manner as described above. Further, the color retention results were arrived at after seven QUV cycles as described above. In this experimentation, the sheets were extruded at the three temperatures; 340_F (171_C), 370_F (188_C), and 400_F (204_C). These color retention results after exposure to seven QUV cycles are summarized in Table 2.

**Table 2**

| *Sample No.* | Description | Δb 340F (171_C) | Δb 370F (188_C) | Δb 400F (204_C) |
|---|---|---|---|---|
| *1* | Improved ASA resin #3 | .5 | .6 | .9 |
| *2* | Improved ASA resin #4 | .7 | .9 | .9 |
| *3* | Improved ASA resin #5 | .5 | .8 | .9 |
| *4* | Improved ASA resin #6 | .5 | .5 | .9 |

## Claims

1. A method of manufacturing vinyl copolymer compositions having a color retention value of from 0.1 to 1.5, measured according to ASTM method G 53, said method consisting essentially of the steps of
α) providing a graft copolymer resin (A) comprising the reaction product of one or more monomers (a₁) selected from the group consisting of
(a11) aromatic vinyl compounds,
(a12) vinyl cyanides, and
(a13) mixtures thereof, wherein at least one monomer is an aromatic vinyl compound
in the presence of an elastomeric rubber (AR) as a grafting base, and
β) mixing the graft copolymer resin (A) with a copolymer (B) selected from the group consisting of:
styrene/acrylonitrile copolymers, α-methylstyrene/acrylonitrile copolymers, styrene/methylmethacrylate copolymers, styrene/maleic anhydride copolymers, α-methylstyrene/styrene/acrylonitrile copolymers, styrene/acrylonitrile/methylmethacrylate copolymers, styrene/acrylonitrile/maleic anhydride copolymers, styrene/ acrylonitrile/acrylic acid copolymers or mixtures thereof, and
γ) adding to the graft copolymer resin (A) and optionally the copolymer resin (B) of from 0.1 to 20% by weight, based on the total composition, of a partially crystalline polymer having a crystallinity of from 5 to 65%, measured according to ISO/DIS 11357-3 as color retention agent (C) and being selected from the group consisting of a polyamide or a mixture of different polyamides,
wherein the addition is carried out at a temperature of at least as high as the melting temperature of (C) minus 10°C and not exceeding 310°C.

2. A method as set forth in claim 1, wherein the graft copolymer resin (A) is obtained in aqueous dispersion and is partially dewatered and mixed with copolymer (B) as damp crumbs and is completely dried during the mixing process.

3. A method as set forth in claims 1 to 2, wherein graft copolymer (A) is ASA.

4. A method as set forth in claims 1 to 3, wherein copolymer (B) is a styrene/acrylonitrile copolymer or an α-methylstyrene/acrylonitrile copolymer or a mixture thereof.

5. A method as set forth in claims 1 to 4, wherein the color retention agent (C) is selected from a polyamide 6.6 (c1) or a partly aromatic polyamide copolyamide (c2) or a mixture of two or more different partly aromatic copolyamides.

6. A method as set forth in claims 1 to 5, wherein step γ) comprises adding from 1 to 10% by weight of the color retention agent (C).

7. Use of a partially crystalline polymer having a crystallinity of from 5 to 65%, measured according to ISO/DIS 11357-3 and being selected from the group consisting of a polyamide or a mixture of different polyamides as color retention agent for vinyl copolymer compositions having a color retention value of from 0.1 to 1.5, measured according to ASTM method G 53, consisting essentially of
A) a graft copolymer resin comprising the reaction product of one or more monomers (a₁) selected from the group consisting of
(a11) aromatic vinyl compounds,
(a12) vinyl cyanides, and
(a13) mixtures thereof, wherein at least one monomer is an aromatic vinyl compound
in the presence of an elastomeric rubber (AR) as a grafting base, and
B) a copolymer selected from the group consisting of:
styrene/acrylonitrile copolymers, α-methylstyrene/acrylonitrile copolymers, styrene/methylmethacrylate copolymers, styrene/maleic anhydride copolymers, α-methylstyrene/styrene/acrylonitrile copolymers, styrene/acrylonitrile/methylmethacrylate copolymers, styrene/acrylonitrile/maleic anhydride copolymers, styrene/ acrylonitrile/acrylic acid copolymers or mixtures thereof,
in an amount of from 0.1 to 20% by weight, based on the total composition.

8. A method of improving the weatherability and color retention performance of an exterior siding for a structure, said method comprising the steps of:
i) manufacturing a composite having
at least one interior layer comprising a thermoplastic and
an exterior layer, being continuous and coextensive with the at least one interior layer and comprising a vinyl copolymer composition having a color retention value of from 0.1 to 1.5, measured according to ASTM method G 53 and
ii) manufacturing the vinyl copolymer composition according to the method set forth in claims 1 to 6.

9. A vinyl copolymer composition having a color retention of from 0.1 to 1.5, measured according to ASTM method G 53 essentially obtainable from
A) a graft copolymer resin comprising the reaction product of one or more monomers (a1) selected from the group consisting of
(a11) aromatic vinyl compounds,
(a12) vinyl cyanides, and
(a13) mixtures thereof, wherein at least one monomer is an aromatic vinyl compound
in the presence of an elastomeric rubber (AR) as a grafting base, and
B) a copolymer selected from the group consisting of:
styrene/acrylonitrile copolymers, α-methylstyrene/acrylonitrile copolymers, styrene/methylmethacrylate copolymers, styrene/maleic anhydride copolymers, α-methylstyrene/styrene/acrylonitrile copolymers, styrene/acrylonitrile/methylmethacrylate copolymers, styrene/acrylonitrile/maleic anhydride copolymers, sty rene/acrylonitrile/acrylic acid copolymers or mixtures thereof, and
γ) of from 0.1 to 20% by weight, based on the total composition, of a partially crystalline polymer having a crystallinity of from 5 to 65%, measured according to ISO/DIS 11357-3 as color retention agent (C) and being selected from the group consisting of a polyamide or a mixture of different polyamides,
by adding the color retention agent (C) to the graft copolymer resin (A) which optionally has been mixed with copolymer (B) and wherein the addition of the color retention agent is carried out at a temperature of at least as high as the melting temperature of (C) minus 10°C and not exceeding 310°C.

## Patentansprüche

1. Verfahren zur Herstellung von Vinylcopolymerzusammensetzungen mit einer Farbechtheitszahl von 0,1 bis 1,5, gemessen gemäß dem ASTM-Verfahren G 53, wobei das Verfahren im Wesentlichen besteht aus den Schritten:
α) Vorsehen eines Pfropfcopolymerharzes (A), umfassend das Reaktionsprodukt von einem oder mehreren Monomeren (a1), gewählt aus der Gruppe bestehend aus:
(a11) aromatischen Vinylverbindungen,
(a12) Vinylcyaniden und
(a13) Mischungen davon, wobei mindestens ein Monomer eine aromatische Vinylverbindung ist;
in Gegenwart eines elastomeren Kautschuks (AR) als Pfropfungsbasis; und
β) Mischen des Pfropfcopolymerharzes (A) mit einem Copolymer (B), gewählt aus der Gruppe bestehend aus:
Styrol/Acrylnitril-Copolymeren, α-Methylstyrol/-Acrylnitril-Copolymeren, Styrol/Methylmethacrylat-Copolymeren, Styrol/Maleinsäureanhydrid-Copolymeren, α-Methylstyrol/Styrol/Acrylnitril-Copolymeren, Styrol/Acrylnitril/Methylmethacrylat-Copolymeren, Styrol/Acrylnitril/Maleinsäureanhydrid-Copolymeren, Styrol/Acrylnitril/-Acrylsäure-Copolymeren oder Mischungen davon; und
γ) Hinzufügen zu dem Pfropfcopolymerharz (A) und gegebenenfalls dem Copolymerharz (B):
0,1 bis 20 Gew.-%, basierend auf der Gesamtzusammensetzung, eines teilweise kristallinen Polymers mit einer Kristallinität von 5 bis 65 %, gemessen gemäß ISO/DIS 11357-3, als Farbechtheitsmittel (C) und gewählt aus der Gruppe bestehend aus einem Polyamid oder einer Mischung von verschiedenen Polyamiden;
wobei die Zugabe bei einer Temperatur von mindestens der Schmelztemperatur von (C) minus 10°C und nicht höher als 310°C durchgeführt wird.

2. Verfahren nach Anspruch 1, wobei das Pfropfcopolymerharz (A) in wässriger Dispersion erhalten wird und teilweise entwässert wird und mit Copolymer (B) als feuchte Krümel gemischt wird und während des Mischverfahrens vollständig getrocknet wird.

3. Verfahren nach Anspruch 1 bis 2, wobei Pfropfcopolymer (A) ASA ist.

4. Verfahren nach Anspruch 1 bis 3, wobei das Copolymer (B) ein Styrol/Acrylnitril-Copolymer oder ein α-Methylstyrol/Acrylnitril-Copolymer oder eine Mischung davon ist.

5. Verfahren nach den Ansprüchen 1 bis 4, wobei das Farbechtheitsmittel (C) gewählt ist aus Polyamid 6.6 (c1) oder einem teilweise aromatischen Polyamidcopolyamid (c2) oder einer Mischung von zwei oder mehreren verschiedenen, teilweise aromatischen Copolyamiden.

6. Verfahren nach den Ansprüchen 1 bis 5, wobei der Schritt γ) das Hinzufügen von 1 bis 10 Gew.-% des Farbechtheitsmittels (C) umfasst.

7. Verwendung eines teilweise kristallinen Polymers mit einer Kristallinität von 5 bis 65 %, gemessen gemäß ISO/DIS 11357-3 und gewählt aus der Gruppe bestehend aus einem Polyamid oder einer Mischung von verschiedenen Polyamiden als Farbechtheitsmittel für Vinylcopolymerzusammensetzungen mit einer Farbechtheitszahl von 0,1 bis 1,5, gemessen gemäß dem ASTM-Verfahren G 53, bestehend im Wesentlichen aus:
A) einem Pfropfcopolymerharz, umfassend das Reaktionsprodukt von einem oder mehreren Monomeren (a1), gewählt aus der Gruppe bestehend aus:
(a11) aromatischen Vinylverbindungen,
(a12) Vinylcyaniden und
(a13) Mischungen davon, wobei mindestens ein Monomer eine aromatische Vinylverbindung ist;
in Gegenwart eines elastomeren Kautschuks (AR) als Pfropfungsbasis, und
B) einem Copolymer,
gewählt aus der Gruppe bestehend aus:
Styrol/Acrylnitril-Copolymeren, α-Methylstyrol/-Acrylnitril-Copolymeren, Styrol/Methylmethacrylat-Copolymeren, Styrol/Maleinsäureanhydrid-Copolymeren, α-Methylstyrol/Styrol/Acrylnitril-Copolymeren, Styrol/Acrylnitril/Methylmethacrylat-Copolymeren, Styrol/Acrylnitril/Maleinsäureanhydrid-Copolymeren, Styrol/Acrylnitril/Acrylsäure-Copolymeren oder Mischungen davon;
in einer Menge von 0,1 bis 20 Gew.-%, basierend auf der Gesamtzusammensetzung.

8. Verfahren zur Verbesserung der Wetterbeständigkeit und der Farbechtheitsleistung einer Außenverkleidung für ein Gefüge bzw. Bauwerk, wobei das Verfahren die folgenden Schritte umfasst:
i) Herstellen eines Komposits mit:
mindestens einer Innenschicht, umfassend einen Thermoplast, und
einer Außenschicht, die nahtlos in die mindestens eine Innenschicht übergeht und eine Vinylcopolymerzusammensetzung mit einer Farbechtheitszahl von 0,1 bis 1,5, gemessen gemäß dem ASTM-Verfahren G 53, umfasst, und
ii) Herstellen der Vinylcopolymerzusammensetzung nach dem Verfahren der Ansprüche 1 bis 6.

9. Vinylcopolymerzusammensetzung mit einer Farbechtheit von 0,1 bis 1,5, gemessen nach dem ASTM-Verfahren G 53, im Wesentlichen erhältlich aus
A) einem Pfropfcopolymerharz,
umfassend das Reaktionsprodukt von einem oder mehreren Monomeren (a1), gewählt aus der Gruppe bestehend aus:
(a11) aromatischen Vinylverbindungen,
(a12) Vinylcyaniden und
(a13) Mischungen davon, wobei mindestens ein Monomer eine aromatische Vinylverbindung ist;
in Gegenwart eines elastomeren Kautschuks (AR) als Pfropfungsbasis, und
B) einem Copolymer, gewählt aus der Gruppe bestehend aus:
Styrol/Acrylnitril-Copolymeren, α-Methylstyrol/-Acrylnitril-Copolymeren, Styrol/Methylmethacrylat-Copolymeren, Styrol/Maleinsäureanhydrid-Copolymeren, α-Methylstyrol/Styrol/Acrylnitril-Copolymeren, Styrol/Acrylnitril/Methylmethacrylat-Copolymeren, Styrol/Acrylnitril/Maleinsäureanhydrid-Copolymeren, Styrol/Acrylnitril/Acrylsäure-Copolymeren oder Mischungen davon; und
γ) 0,1 bis 20 Gew.-%, basierend auf der Gesamtzusammensetzung, eines teilweise kristallinen Polymers mit einer Kristallinität von 5 bis 65 %, gemessen gemäß ISO/DIS 11357-3, als Farbechtheitsmittel (C) und gewählt aus der Gruppe bestehend aus einem Polyamid oder einer Mischung von verschiedenen Polyamiden;
durch Zugabe des Farbechtheitsmittels (C) zu dem Pfropfcopolymerharz (A), welches gegebenenfalls mit Copolymer (B) gemischt worden ist und wobei die Zugabe des Farbechtheitsmittels bei einer Temperatur von mindestens der Schmelztemperatur von (C) minus 10°C und nicht höher als 310°C durchgeführt wird.

## Revendications

1. Procédé de fabrication de compositions de copolymère vinylique ayant une valeur de stabilité de couleur de 0,1 à 1,5, mesurée selon le procédé ASTM G 53, ledit procédé comportant essentiellement les étapes consistant à
α) fournir une résine de copolymère greffé (A)
comportant le produit de réaction d'un ou de plusieurs monomères (a1) sélectionnés dans le groupe comportant
(a11) des composés vinyliques aromatiques,
(a12) des cyanures vinyliques, et
(a13) des mélanges de ceux-ci, au moins un monomère étant un composé vinylique aromatique
en présence d'un caoutchouc élastomère (AR) en tant que base de greffe, et
β) mélanger la résine de copolymère greffé (A) avec un copolymère (B) sélectionné dans le groupe comportant : des copolymères de styrène/acrylonitrile, des copolymères de α-méthylstyrène/acrylonitrile, des copolymères de styrène/méthylméthacrylate, des copolymères de styrène/anhydride maléique, des copolymères de α-méthylstyrène/styrène/acrylonitrile, des copolymères de styrène/acrylonitrile/méthylméthacrylate, des copolymères de styrène/acrylonitrile/anhydride maléique, des copolymères de styrène/acrylonitrile/acide acrylique ou des mélange de ceux-ci, et
γ) ajouter à la résine de copolymère greffé (A), et facultativement à la résine copolymère (B), de 0,1 à 20 % en poids, sur la base de la composition totale, un polymère partiellement cristallin ayant une cristallinité de 5 à 65 %, mesurée selon la norme ISO/DIS 11357-3 en tant qu'agent de stabilité de couleur (C), et étant sélectionné dans le groupe comportant un polyamide ou un mélange de différents polyamides,
dans lequel l'ajout est effectué à une température au moins aussi élevée que la température de fusion de (C) moins 10°C, et ne dépassant pas 310°C.

2. Procédé selon la revendication 1, dans lequel la résine de copolymère greffée (A) est obtenue dans une dispersion aqueuse, et est partiellement déshydratée et mélangée avec le copolymère (B) sous la forme de miettes humides, et est complètement séchée pendant le processus de mélange.

3. Procédé selon la revendication 1 ou 2, dans lequel le copolymère greffé (A) est du ASA.

4. Procédé selon l'une quelconque des revendications 1 à 3, dans lequel le copolymère (B) est un copolymère de styrène/acrylonitrile ou un copolymère de α-méthylstyrène/acrylonitrile, ou un mélange de ceux-ci.

5. Procédé selon l'une quelconque des revendications 1 à 4, dans lequel l'agent de stabilité de couleur (C) est sélectionné parmi un polyamide 6,6 (c1), ou un copolyamide de polyamide partiellement aromatique (c2), ou un mélange de deux copolyamides partiellement aromatiques différents ou plus.

6. Procédé selon l'une quelconque des revendications 1 à 5, dans lequel l'étape γ) comporte l'ajout de 1 à 10 % en poids de l'agent de stabilité de couleur (C).

7. Utilisation d'un polymère partiellement cristallin ayant une cristallinité de 5 à 65 %, mesurée selon la norme ISO/DIS 11357-3, et étant sélectionné dans le groupe constitué d'un polyamide ou d'un mélange de différents polyamides en tant qu'agent de stabilité de couleur pour des compositions de copolymère vinylique ayant une valeur de stabilité de couleur de 0,1 à 1,5, mesurée selon le procédé ASTM G 53, constitué essentiellement
A) d'une résine de copolymère greffé, comportant le produit de réaction d'un ou de plusieurs monomères (a1) sélectionnés dans le groupe comportant
(a11) des composés vinyliques aromatiques,
(a12) des cyanures vinyliques, et
(a13) des mélanges de ceux-ci, au moins un monomère étant un composé vinylique aromatique,
en présence d'un caoutchouc élastomère (AR) en tant que base de greffe, et
B) un copolymère
sélectionné dans le groupe comportant :
des copolymères de styrène/acrylonitrile, des copolymères de α-méthylstyrène/acrylonitrile, des copolymères de styrène/méthylméthacrylate, des copolymères de styrène/anhydride maléique, des copolymères de α-méthylstyrène/styrène/acrylonitrile, des copolymères de styrène/acrylonitrile/méthylméthacrylate, des copolymères de styrène/acrylonitrile/anhydride maléique, des copolymères de styrène/acrylonitrile/acide acrylique ou des mélanges de ceux-ci, en une quantité de 0,1 à 20 % en poids, sur
la base de la composition totale.

8. Procédé pour améliorer l'altérabilité et la performance de stabilité de couleur d'un revêtement extérieur pour une structure, ledit procédé comportant les étapes consistant à :
i) fabriquer un composite ayant au moins une couche intérieure comportant un matériau thermoplastique et une couche extérieure, étant continue et coextensive à ladite au moins une couche intérieure, et comportant une composition de copolymère vinylique ayant une valeur de stabilité de couleur de 0,1 à 1,5, mesurée selon le procédé ASTM G 53 et
ii) fabriquer la composition de copolymère vinylique selon le procédé établi dans l'une quelconque des revendications 1 à 6.

9. Composition de copolymère vinylique ayant une stabilité de couleur de 0,1 à 1,5, mesurée selon le procédé ASTM G 53, pouvant être obtenue essentiellement à partir
A) d'une résine de copolymère greffé,
comportant le produit de réaction d'un ou de plusieurs monomères (a1) sélectionnés dans le groupe comportant
(a11) des composés vinyliques aromatiques,
(a12) des cyanures vinyliques, et
(a13) des mélanges de ceux-ci, au moins un monomère étant un composé vinylique aromatique, en présence d'un caoutchouc élastomère
(AR) en tant que base de greffe, et
B) un copolymère sélectionné dans le groupe comportant :
des copolymères de styrène/acrylonitrile, des copolymères de α-méthylstyrène/acrylonitrile, des copolymères de styrène/méthylméthacrylate, des copolymères de styrène/anhydride maléique, des copolymères de α-méthylstyrène/styrène/acrylonitrile, des copolymères de styrène/acrylonitrile/méthylméthacrylate, des copolymères de styrène/acrylonitrile/anhydride maléique, des copolymères de styrène/acrylonitrile/acide acrylique ou des mélanges de ceux-ci, et
γ) de 0,1 à 20 % en poids, sur la base de la composition totale, d'un polymère partiellement cristallin ayant une cristallinité de 5 à 65 %, mesurée selon la norme ISO/DIS 11357-3 en tant qu'agent de stabilité de couleur (C), et étant sélectionné dans le groupe comportant un polyamide ou un mélange de différents polyamides,
en ajoutant l'agent de stabilité de couleur (C) à la résine de copolymère greffé (A) qui a facultativement été mélangée avec le copolymère (B), et dans lequel l'ajout de l'agent de stabilité de couleur est effectué à une température au moins aussi élevée que la température de fusion de (C) moins 10°C, et ne dépassant pas 310°C.
